(19) Europäisches Patentamt
European Patent Office
Office européen des brevets

(11) **EP 1 433 576 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(51) Int Cl.:
***B23K 26/08*** *(2014.01)* ***B25J 19/00*** *(2006.01)*

(21) Anmeldenummer: **03029828.5**

(22) Anmeldetag: **24.12.2003**

(54) **Knickarmroboter mit einer an der zweiten Achse angeordneten Lasereinrichtung**

Jointed arm type robot with a laser device arranged at its second axis

Robot de type à bras articulé muni d'un laser disposé au niveau de son deuxième axe

(84) Benannte Vertragsstaaten:
**DE ES FR IT**

(30) Priorität: **24.12.2002 DE 10261592**

(43) Veröffentlichungstag der Anmeldung:
**30.06.2004 Patentblatt 2004/27**

(73) Patentinhaber: **Reis GmbH & Co. Maschinenfabrik
63785 Obernburg (DE)**

(72) Erfinder:
• **Fischer, Axel
63785 Obernburg (DE)**
• **Kroth, Eberhard, Dr.
63785 Obernburg (DE)**

(74) Vertreter: **Draudt, Axel Hermann Christian et al
Bungartz Christophersen
Partnerschaft mbB Patentanwälte
Lönsstrasse 59
42289 Wuppertal (DE)**

(56) Entgegenhaltungen:
**FR-A- 2 551 378 US-A- 4 698 483**

• PRITSCHOW G ET AL: "KINCKARMROBOTER ZUR 3-D-LASERBEARBEITUNG HOHE GENAUIGKEIT UND INNENLIEGENDE STRAHLFUHRUNG" WERKSTATTSTECHNIK, SPRINGER VERLAG. BERLIN, DE, Bd. 85, Nr. 6, 1. Juni 1995 (1995-06-01), Seiten 318-322, XP000509040 ISSN: 0340-4544

EP 1 433 576 B1

**Beschreibung**

Die Erfindung betrifft einen Knickarmroboter für die Bearbeitung von Werkstücken mittels Laserstrahlung, mit mindestens erste bis fünfte Achsen und mit einer Lasereinrichtung.

Ein Knickarmroboter mit den vorgenannten Merkmalen ist beispielsweise aus der FR 2 551 378 A bekannt. Dieser bekannte Knickarmroboter ist dabei so ausgestaltet, daß er in allen Richtungen des kathesischen Koordinatensystems erforderliche Bewegungen im Rahmen der Reichweiten seiner ersten bis fünften Achsen durchführen kann. Die Numerierung dieser fünf Achsen ist für Knickarmroboter allgemein bekannt und werden beginnend mit der am Fundament bzw. am Boden angeordneten senkrechten ersten Achse aufsteigend bis zur Roboterhand durchnumeriert. Es wird darauf hingewiesen, daß, wie in Fachkreisen üblich, der Begriff Achse nicht ausschließlich die Schwenkachse, sondern auch die um die Schwenkachse bewegten Bauteile, z.B. Arme bezeichnet. Ein weiterer Knickarmroboter ist aus der EP0901875 bekannt. Üblicherweise enthält bei derartigen bekannten Knickarmrobotern die dritte Achse die Lasereinrichtung zur Erzeugung von Laserstrahlen, mit denen die Werkstücke zu bearbeiten sind.

Dies wird allerdings, gerade im Hinblick auf schnellere Arbeitsbewegungen als besonders hinderlich angesehen, da diese Lasereinrichtung doch erheblich zu dem Gewicht beiträgt, das zusammen mit der dritten Achse bewegt werden muß. Dadurch entstehen einerseits Grenzen bezüglich der Laserleistungen, da Laser mit höheren Leistungen aufgrund ihres größeren Gewichts nicht mehr einsetzbar sind, und andererseits kann die Taktzeit bzw. die Bewegung der einzelnen Achsen, insbesondere der ersten bis dritten Achse nicht mehr beschleunigt werden, da dies einerseits zu Ungenauigkeiten bei den Bewegungsabläufen führt und andererseits einen unangemessen hohen technischen und somit auch kostenmäßigen Aufwand bedeutet.

Der Erfindung liegt daher die Aufgabe zugrunde, einen Knickarmroboter der eingangs genannten Art anzugeben, der mit technisch einfachen Mitteln sowohl eine Leistungssteigerung bezüglich der Laserleistung als auch des Ausstoßes ermöglicht und gleichzeitig die Herstellungskosten reduziert.

Diese Aufgabe wird bei einem Knickarmroboter der eingangs genannten Art erfindungsgemäß dadurch gelöst, daß die Lasereinrichtung an der zweiten Achse angeordnet und die damit erzeugbaren Laserstrahlen vor ihrem Auftreffen auf das werkstück im wesentlichen innerhalb der dritten bis fünften Achsen führbar sind und dass in einem Roboterkopf eine sechste Achse angeordnet ist, die quer zur fünften Achse verläuft.

Für die Erfindung ist es einerseits von besonderer Bedeutung, daß die Lasereinrichtung nunmehr an der zweiten Achse angeordnet ist. Dadurch kann die Bewegung der Bearbeitungsoptik mit einer wesentlich höheren Dynamik erfolgen. Da die Strahlenführungsvorrichtungen auch noch im wesentlichen im Inneren der dritten bis fünften Achsen angeordnet ist, können diese auch noch besser vor Außeneinflüssen geschützt werden. Dadurch ist auch eine günstigere Massenverteilung gegeben, da nunmehr die dritte Achse verglichen mit bekannten Knickarmrobotern wesentlich leichter ist. Des weiteren wird dadurch die Einhaltung von Randbedingungen für den Lasereinsatz in Verbindung mit Robotern wesentlich unkritischer, da die Baugröße und das Gewicht des Lasers eine untergeordnete Rolle spielen. Des weiteren wird der Laser wesentlich geringeren Beschleunigungen und Geschwindigkeiten ausgesetzt, so daß dadurch auch noch eine höhere Lebensdauer für den Laser selbst resultiert.

Außerdem können durch die vorteilhafte Anbringung des Lasers an der zweiten Achse nunmehr auch Laser größerer Leistung und somit höheren Gewichts verwandt werden. Ferner können aufgrund des erfindungsgemäßen Anordnens der Lasereinrichtung Laser unterschiedlicher Hersteller aber auch einfach Laser unterschiedlicher Arten eingesetzt werden. Da die Lasereinrichtung nicht mehr auf der dritten Achse angeordnet ist, ergeben sich bei der Bearbeitung wesentlich kleinere Störkonturen, die naturbedingt einen flexibleren Einsatz ermöglichen. Dies erleichtert auch 3-D-Bearbeitungen besonders ausgebildeter werkstücke. Zudem ist es auch noch möglich, den Antrieb der dritten Achse bzw. den Arm wesentlich schlanker und auch noch mit kleineren Massen auszulegen. Dies erhöht wiederum die Genauigkeit der Bewegungen und trägt auch noch zu einer Erhöhung der Bewegungsgeschwindigkeiten bei.

Ein derartiger Knickarmroboter mit integrierter Strahlführung besaß nur fünf Bewegungsachsen. Die Strahlführung war in den Einbauraum des Antriebsstranges der fehlenden sechsten Bewegungsachse integriert. Bei Laseranwendungen, bei denen nur der Laserstrahl entlang einer fest programmierten Bearbeitungsbahn geführt werden musste, war dies ausreichend.

In Laseranwendungen, bei denen z.B. zusätzlich zur Bearbeitungsoptik Einrichtungen orientiert zur Bewegungsbahn geführt werden müssen, sind jedoch sechs Freiheitsgrade und damit auch eine sechste Roboterachse notwendig.

Bei folgenden Anwendungsfällen wird daher eine Sechs-Achs-Kinematik benötigt:

- Kaltdrahtzuführung beim Laserschweißen und -löten;

- Führung von Bearbeitungswerkzeugen, die richtungsabhängig sind, wie z.B. beim Laserbeschichten;

- Führung eines Online-Bahnverfolgungssensors;

- Führung eines Geometriesensors zur Aufzeichnung des durch den Bearbeitungsprozeß erzeugten Ergebnisses, eine sogenannten Online-Qualitätsprüfung;
- Führung anderer Prozeßeinrichtungen, wie z.B. Andruckrollen und ähnliches;
- Führung von Bearbeitungsoptiken mit Doppelfokus; und
- Positionierung eines Scanners", z.B. ein Strahlablenksystem.

In diesen Anwendungsfällen wurde bisher üblicherweise eine zusätzliche Achsbaugruppe zwischen der fünften Achse und die Bearbeitungsoptik montiert. Die zusätzliche Achsbaugruppe besitzt einen Antriebs-Servomotor und ein Hohlwellengetriebe, durch das der Laserrohstrahl zur Bearbeitungsoptik geleitet wird. Diese Lösung schränkt jedoch wegen des Bauvolumens die Beweglichkeit des Roboters stark ein und wirkt sich zudem störend auf die zugänglichkeit an dreidimensionalen Bauteilen aus. Weiterhin müssen die elektrischen Leistungs- und Signalleitungen zur Ansteuerung der Achse außen zugeführt werden. Um das Bauvolumen der Achse so gering wie möglich zu halten, werden nur sehr kleine und damit leistungsschwache Antriebe eingesetzt. Wegen der geringen Leistung sind entsprechend hohe Untersetzungen des Hohlwellengetriebes notwendig. Dies wirkt sich nachteilig auf die Bewegungsdynamik, d.h. die mögliche Geschwindigkeit und Beschleunigung der sechsten Achse aus.

Für diese Anwendungsfälle ist der Einsatz 6-achsiger Standardroboter und einer externen Strahlzuführung notwendig. Bei $CO_2$-Lasern schränkt diese jedoch die Bewegungsmöglichkeit des Roboters stark ein und ist aufgrund des Bauvolumens ebenfalls störend. Deshalb werden hier meist fasergeführte Laser, z.B. Nd:YAG-Laser eingesetzt. Das Lichtleitkabel oder die Faser wird zu der an der sechsten Achse angebauten Bearbeitungsoptik geführt. Die Baugröße des Faseranschlusses und die erforderliche verlegung der Faser ergeben große Störkonturen. Ein weiterer Nachteil sind die hohen Anschaffung- und Betriebskosten von Festkörperlasern.

Daher ist es notwendig, dass in einem Roboterkopf auch eine sechste Achse angeordnet ist, die quer zur fünften Achse verläuft.

Um störende Außenkonturen zu vermeiden, ist es vorteilhaft, wenn ein Antrieb für die sechste Achse in einem Gehäuse für die vierte Achse angeordnet ist.

Gemäß einer Weiterbildung der Erfindung ist es vorgesehen, daß in einem bzw. dem Gehäuse für die vierte Achse ein weiterer Antrieb für die fünfte Achse angeordnet ist.

Von besonderem Vorteil ist dann, wenn der Antrieb für die sechste Achse und der weitere Antrieb für die fünfte Achse in dem Gehäuse derart angeordnet sind, daß erste und zweite Antriebswellen der beiden Antriebe parallel zur vierten Achse in Richtung der Rotorhand weisen.

Selbstverständlich gibt es viele Arten der Bewegungsübertragung. Eine vorteilhafte Ausführungsform besteht dabei darin, wenn die Antriebswellen entsprechende Kegelradgetriebe antreiben.

Dadurch ergeben sich folgende Vorteile:

- integrierte sechste Achse;
- Kinematik geschlossen transformierbar, da sich die Achsen 4,5 und 6 in einem Punkt schneiden, eine sogenannte Zentralhand";
- Antriebstechnik räumlich getrennt von der Strahlführung;
- kompakte Bauform;
- keine zusätzlichen Störkonturen;
- keine Einschränkung in der Beweglichkeit des Roboters;
- kurze Werkzeuglängen, z.B. kurzer Abstand von dem Handgelenksmittelpunkt zum Fokus;
- Massen der zusätzlichen Achse sind näher an der Roboterbasis angeordnet und müssen nur auf den Achsen 1 bis 4 mitbewegt werden; und
- elektrische Leistungs- und Signalleitungen zur Ansteuerung der Achse müssen nur bis zur Achse 4 geführt werden.

Es sind mehrere Möglichkeiten gegeben, um den sogenannten Laser-Rohstrahl in das Achsensystem einzuleiten. Vorteilhaft ist es aber, wenn daß im Betriebszustand der Laser-Rohstrahl im wesentlichen seitlich entlang der Armstruktur zwischen der zweiten und der dritten Achse verläuft und im wesentlichen senkrecht auf die dritte Achse trifft.

Dabei ist es dann noch von besonderem Vorteil, wenn die dritte Achse als antreibbare Hohlwelle ausgeführt ist.

Besonders unabhängig von der Laserleistung ist man dann, wenn im Betriebszustand die Laserstrahlen über ein mehrere Spiegel aufweisendes Strahlführungssystem auf das Werkstück leitbar sind und daß dieses Strahlführungssystem innerhalb der dritten bis fünften Achse angeordnet ist.

Dazu sieht eine weitere Ausgestaltung der Erfindung es vor, daß die Spiegel derart angeordnet sind, daß im Betriebszustand die Laserstrahlen im Bereich der fünften Achse bzw. der Roboterhand von der vierten Achse versetzt auf die fünfte Achse auftreffen und anschließend über Spiegel auf das Werkstück geworfen werden.

Dies ist einerseits möglich, wenn die Laserstrahlen über Spiegel leitbar sind.

Eine besonders sichere Anordnung ist dabei dann gegeben, wenn ein erster Spiegel so angeordnet ist, daß er den Laser-Rohstrahl der Lasereinrichtung im wesentlichen konzentrisch zur dritten Achse auf einen zweiten Spiegel wirft, der die Laserstrahlen im wesentlichen konzentrisch zur vierten Achse auf einen dritten Spiegel wirft und daß zur freien Drehbarkeit der fünften Achse bzw. der dazu gehörenden Roboterhand dieser dritte Spiegel die Laserstrahlen quer zur vierten Achse nach außen auf einen vierten Spiegel wirft, dieser die Laserstrahlen in etwa parallel zur vierten Achse auf einen fünften Spiegel wirft, der die Laserstrahlen quer zur vierten Achse wieder nach innen auf einen im Schnittpunkt der vierten und fünften Achse angeordneten sechsten Spiegel wirft, von wo aus die Laserstrahlen auf das Werkstück geworfen werden.

Um die Justieraufgaben bezüglich der Spiegel noch weiter zu reduzieren, ist es vorteilhaft, wenn die Laserstrahlen über vier Spiegel auf das Werkstück leitbar sind. Eine geringe Spiegelanzahl bedeutet gleichzeitig geringere Leistungsverluste.

Eine derartige Anordnung ist dann besonders vorteilhaft, wenn ein erster Spiegel, der so angeordnet ist, daß er den Laser-Rohstrahl der Lasereinrichtung im wesentlichen konzentrisch zur dritten Achse auf einen zweiten Spiegel wirft, der in einer Spiegelführung aufgenommen ist und die Laserstrahlen bei Drehung der vierten Achse auf einer Kegelhüllfläche definiert zum dritten Spiegel leitet, der sich wiederum bei einer Drehung der vierten Achse auf einer Kreisbahn bewegt und die Laserstrahlen auf einen vierten Spiegel leitet, welcher die Laserstrahlen auf das Werkstück wirft.

Es sind eine Vielzahl von Spiegelführungen denkbar. Vorteilhaft ist es aber, wenn die Spiegelführung aus einem Grundkörper, einer Spiegelaufnahme, einem Koppelgetriebe und einem Verbindungselement besteht, wobei der Grundkörper der Spiegelführung um die dritte Achse drehbar gelagert ist.

Dabei ist gemäß einer besonders einfachen Ausführungsform es vorgesehen, daß die kreisbahnförmige Bewegung des dritten Spiegels mittels eines Verbindungselements auf die Spiegelführung übertragbar ist.

Ferner ist es möglich, daß die Bewegungen des Verbindungselement mechanisch zwangsgeführt sind oder es durch mit Fremdenergie betriebenen Aktoren bewegt wird. Falls eine mechanische Bewegungsübertragung gewählt wird, ist es vorteilhaft, wenn das mechanische Verbindungselement ein in der Verbindungsachse beider Spiegel liegendes Schutzrohr ist.

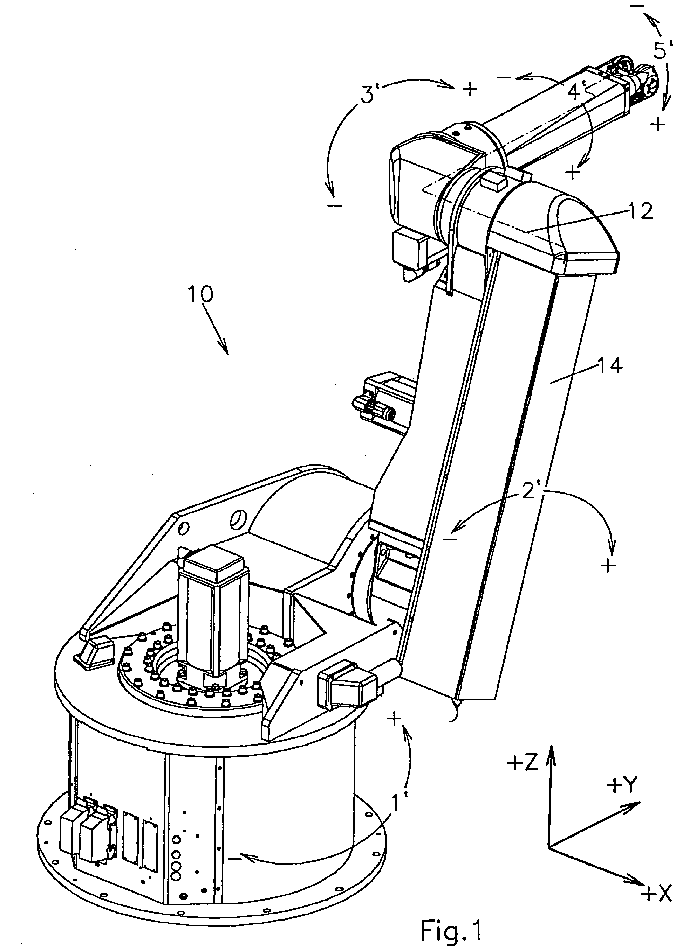

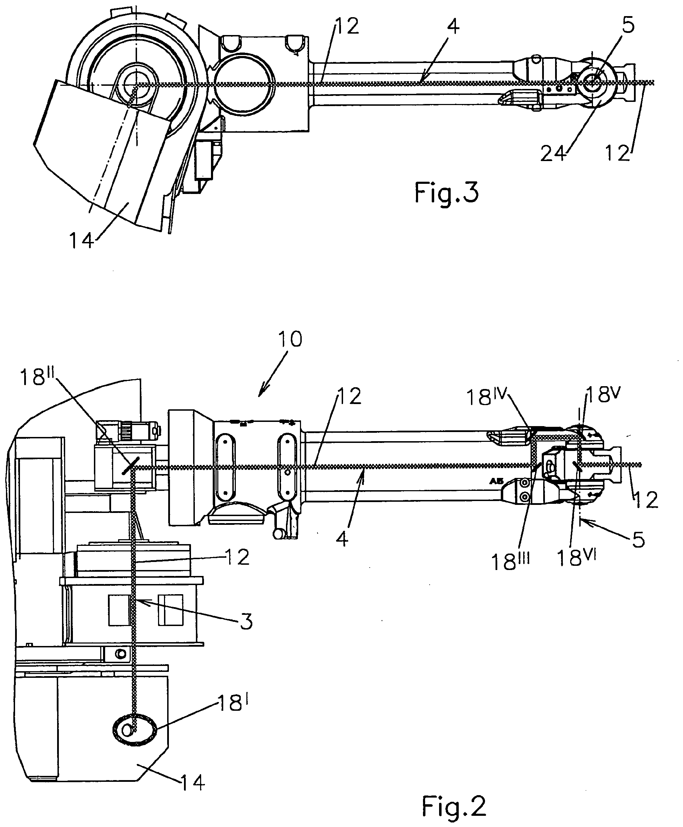

Eine Alternative zum Koppelgetriebe für eine Strahlführung mit vier Spiegeln wird im folgenden beschrieben. Gemäß den Ausführungen mit Bezug auf die Figuren 1 bis 5 ist die Möglichkeit eines Austauschs der $\alpha/2$ mechanischen Nachführung durch ein elektronisches Kippspiegelsystem angegeben. Durch eine Auswertung der Meßsystemsignale der vierten Achse 4 wird in diesem Fall der Spiegel in den beiden Achsen nach den definierten geometrischen Zusammenhängen durch mit Fremdenergie betriebenen Aktoren bewegt. Hierbei ist keine mechanische Spiegelführung erforderlich.

Gemäß einer Weiterbildung der Erfindung ist es vorgesehen, daß das Verbindungselement auf der einen Seite mit dem Grundkörper der Spiegelführung über ein Gelenk verbunden ist, dessen Achse senkrecht zur Drehachse des Grundkörpers und gleichzeitig durch den Schnittpunkt der dritten und vierten Achsen geht, und auf der anderen Seite mit der Roboterhand verbunden ist.

Es ist eine Vielzahl von Koppelgetrieben allgemeinster Art denkbar. Vorteilhaft ist es aber, wenn das Koppelgetriebe das Verbindungselement mit der Spiegelaufnahme verbindet und den Aufbau eines Planetengetriebes aufweist.

Dabei kann es vorgesehen werden, daß ein Sonnenrad des Planetengetriebes mit dem Verbindungselement verbunden ist und ein zweites Sonnenrad fest mit der Spiegelaufnahme verbunden ist, wobei zwei fest miteinander gleichachsig verbundene Planetenräder drehbar an dem Grundkörper angeschlossen sind. Bei einer Gesamtuntersetzung zwischen den beiden Sonnenrädern von 0,5 bewegt sich die Spiegelaufnahme genau mit halber Winkelgeschwindigkeit des Verbindungselements. Hierdurch wird der Laserstrahl genau in die Verbindungsachse zwischen den zweiten und dritten Spiegeln geführt.

Für die Übertragung der Einzelbewegung der einzelnen Spiegel ist es vorteilhaft, wenn der Winkel zwischen der Spiegelfläche des zweiten Spiegels und der vierten Achse in der Schnittebene wie folgt ermittelbar ist:

$$\alpha2 = 45° \pm arctan\ a3/a2 * 0,5,$$

wobei a2 der Abstand zwischen dem zweiten und dritten Spiegel und a3 der Abstand zwischen dem dritten und vierten Spiegel voneinander bedeuten und das Vorzeichen von der Lage der vierten Achse im Raum abhängt.

Zur weiteren Vereinfachung ist es dabei vorteilhaft, wenn der Winkel zwischen der Spiegelfläche des dritten Spiegels und der fünften Achse in der Schnittebene wie folgt ermittelbar ist:

$$\alpha3A = 45° - arctan\ a3/a2 * 0,5$$

wobei a2 der Abstand zwischen dem zweiten und dritten Spiegel und a3 der Abstand zwischen dem dritten und vierten Spiegel voneinander bedeuten.

Da die einzelnen Spiegel bezüglich ihrer Übertragungsfähigkeit sehr schmutzempfindlich sind, ist es vorteilhaft, wenn der Innenraum der gesamten Strahlführung gegenüber der Antriebstechnik der Achsen abgedichtet ist.

Um eventuell bei der Herstellung der Einzelteile auftretende Toleranzen ausgleichen zu können, ist es vorteilhaft, wenn die Lasereinrichtung justierbar ausgestaltet ist.

Aufgrund der erfindungsgemäßen Spiegelführung ist es möglich, daß die Länge der vierten Achse geeignet vorwählbar ist.

Insbesondere bei der Bearbeitung von Kunststoff ist es vorteilhaft, wenn eine beliebig gestaltete Prozeßgaszuführung vorhanden ist.

Selbstverständlich ermöglicht die Erfindung auch den Einsatz unterschiedlicher Laserarten.

Gemäß einer Weiterbildung der Erfindung ist es vorgesehen, daß über fasergeführte Laser die Strahlführung erfolgt.

Alternativ dazu ist es aber auch möglich, daß über vier Spiegel sowie einem optischen Element die Strahlführung erfolgt.

Obwohl eine Vielzahl optischer Elemente denkbar sind, ist es vorteilhaft, wenn das optische Element ein Strahlablenkprisma ist.

Weitere Vorteile und Merkmale ergeben sich aus der folgenden Beschreibung mehrer Ausführungsbeispiele sowie aus den Figuren, auf die Bezug genommen wird. Es zeigen:

Fig.1    eine Perspektivansicht eines Knickarmroboters gemäß einer ersten Ausführungsform, unter anderem zur Darstellung der fünf Achsen;

Fig.2    eine geschnittene Teilansicht des in Fig.1 dargestellten Ausführungsbeispiels von oben;

Fig.3    eine geschnittene Teilansicht der in Fig.2 dargestellten Ausführungsform senkrecht zur Blattebene;

Fig.4    eine teilweise geschnittene Draufsicht auf ein weiteres Ausführungsbeispiel zur Darstellung der Spiegelführung;

Fig.5    eine teilweise geschnittene Ansicht des Ausführungsbeispiels gemäß Fig.4, gesehen senkrecht zur Blattebene;

Fig.6    eine teilweise geschnittene Ansicht einer Roboterhand gemäß eines weiteren Ausführungsbeispiels;

Fig.7    eine der Fig.6 ähnliche teilweise geschnittene Seitenansicht mit einem weiteren Antrieb für die fünfte Achse;

Fig.8    eine Seitenansicht des Knickarmroboters mit einem Laser an der Achse 2 und Strahlführung mit vier Spiegeln und Strahlablenkprisma;

Fig.9    eine Draufsicht des in Fig.8 gezeigten Knickarmroboters;

Fig.10   eine Detailansicht des Knickarmroboters gemäß Fig.8 und Fig.9; und

Fig.11   eine Detailansicht des in Fig.9 dargestellten Knickarmroboters.

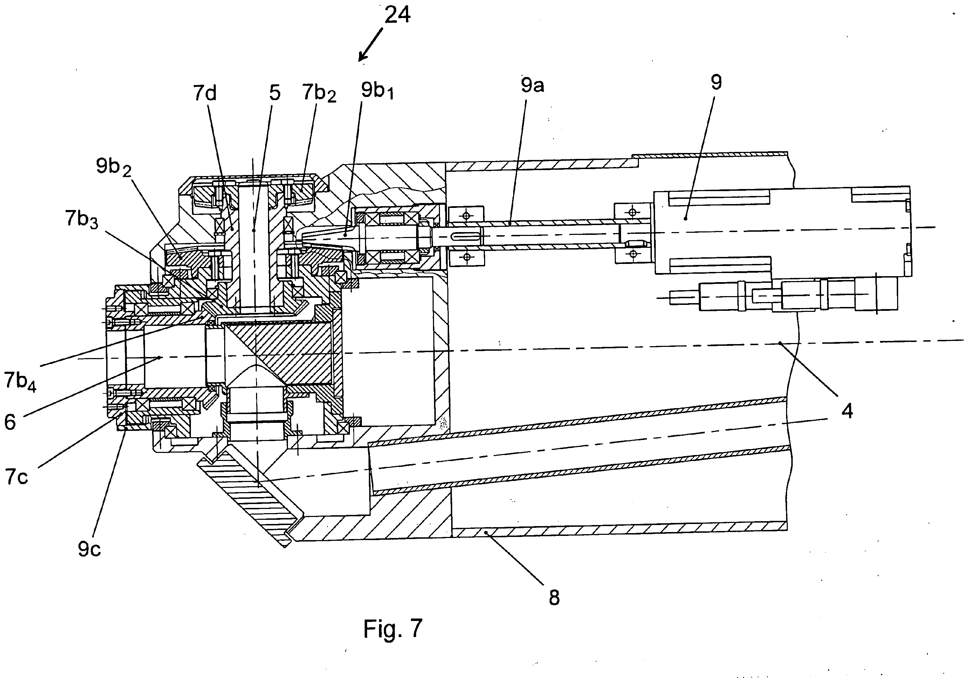

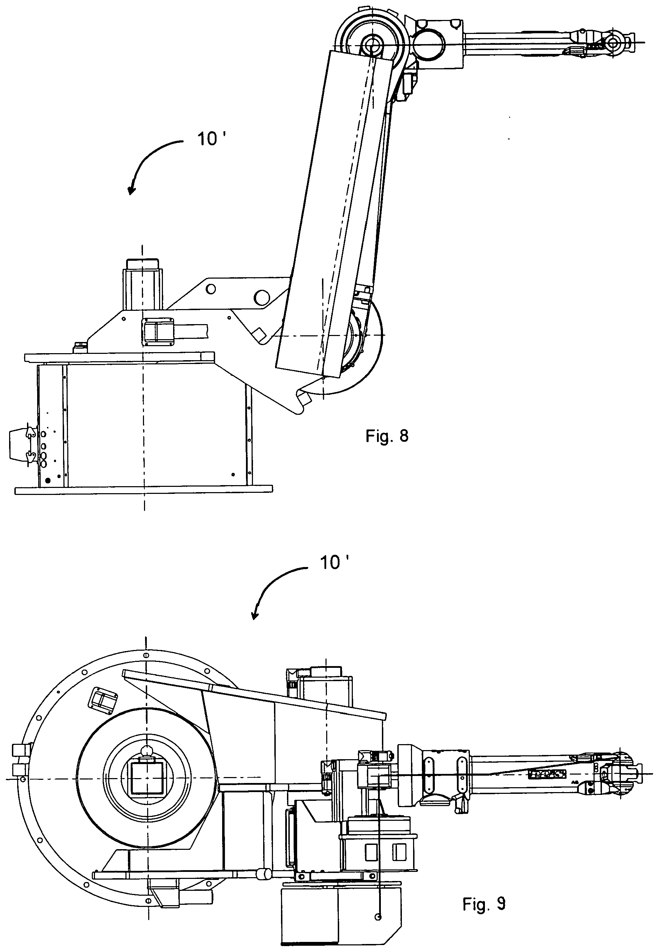

Anhand der Fig.1 bis 11 werden nun verschiedene Ausführungsbeispiele eines Knickarmroboters 10 bzw. 10' beschrieben. Dabei werden, soweit nichts anderes ausgesagt, für gleiche Begriffe gleiche Bezugszahlen verwandt. Es wird darauf hingewiesen, daß, wie in Fachkreisen üblich, der Begriff Achse nicht ausschließlich die Schwenkachse, sondern auch die um die Schwenkachse bewegten Bauteile, z.B. Arme bezeichnet.

Der in Fig.1 gezeigte Knickarmroboter 10 dient zur Bearbeitung von Werkstücken mittels Laserstrahlung. Ein derartiger Knickarmroboter ist prinzipiell so aufgebaut, wie er in der DE 43 35 367 beschrieben wurde. Ein derartiger Knickarmroboter 10 ist so ausgestaltet, daß seine einzelnen Bestandteile in allen Richtungen des kathesischen Koordinatensystems die erforderlichen Bewegungen im Rahmen der Reichweiten seiner Achsen durchführen kann. Dieser Knickarmroboter 10 ist mit ersten bis fünften Achsen 1,2,3,4 und 5 für die 3-D Bearbeitung von Werkstücken ausgebildet. Dabei besitzt jeder der fünf Achsen 1,2,3,4 und 5 einen nicht dargestellten Stellmotor für den entsprechenden Drehantrieb. Diese Stellmotoren können von einer Bahnsteuerung so beaufschlagt werden, daß sie die gewünschten Bewegungen insbesondere Achsbewegungen veranlassen.

Wie aus Fig.1 ersichtlich, ist die erste Achse 1 diejenige, um die sich der gesamte weitere Knickarmroboter 10 um eine senkrechte Achse verdrehen kann. Daran schließt sich die zweite Achse an, die sich im wesentlichen senkrecht zur ersten Achse 1 verdrehen kann. Dabei erfolgt die Drehung dieser zweiten Achse 2 um eine Achse, die nicht die erste Achse 1 schneidet. Am darauf folgenden Ende der zweiten Achse 2 ist eine dritte Achse 3 angeschlossen, die wiederum Drehbewegungen bezüglich dieses Endes der zweiten Achse 2 ermöglicht, wobei allerdings diese Achse 3 parallel zur zweiten Achse 2 liegt. Zur weiteren Erhöhung der Beweglichkeit des Knickarmroboters 10 ist an die dritte Achse wiederum eine vierte Achse 4 angeschlossen, die wiederum auf der dritten Achse 3 senkrecht steht und diese schneidet. Abschließend ist eine fünfte Achse 5 vorhanden, um die eine Roboterhand 24 verschwenkt werden kann. Diese fünfte Achse 5 steht im wesentlichen senkrecht zur vierten Achse 4 und schneidet diese.

Selbstverständlich weist die Roboterhand 24 die für auf Laserbasis arbeitenden Knickarmroboter 10 notwendige Optik auf.

Wie sich aus allen Figuren ergibt, ist seitlich entlang der Armstruktur der zweiten Achse 2 und dritten Achse 3 eine Lasereinrichtung 14 angeordnet. Dies ist derart ausgeführt, daß die damit erzeugbaren Laserstrahlen 12 vor ihrem Auftreffen auf das Werkstück im wesentlichen innerhalb der dritten bis fünften Achsen 3,4 und 5 führbar sind. Dabei ist die Lasereinrichtung 14 so an der zweiten Achse 2 angeordnet, daß der Laser-Rohstrahl zum Beispiel parallel zum nicht näher bezeichneten Schwenkarm senkrecht auf die dritte Achse 3 trifft.

Die dritte Achse 3 ist mit einem Hohlwellenantrieb ausgeführt. Durch diese Hohlwelle wird der Laserstrahl 12 durch einen Spiegel 18I so geleitet, daß er konzentrisch zur Achse 3 und senkrecht auf die vierte Achse 4 trifft. Bei diesem Schnittpunkt ist ein zweiter Spiegel 18II angeordnet, der die Laserstrahlen 12 im wesentlichen konzentrisch zur vierten Achse 4 auf einen dritten Spiegel 18III wirft. Zur freien Drehbarkeit der fünften Achse 5 bzw. der dazugeordneten Roboterhand 24 wirft dieser dritte Spiegel 18III die Laserstrahlen 12 quer zur vierten Achse 4 nach außen auf einen vierten Spiegel 18IV. Dieser vierte Spiegel 18IV wirft wiederum in etwa parallel zur vierten Achse 4 die Laserstrahlen 12 auf einen fünften Spiegel 18V, der die Laserstrahlen 12 wiederum quer zur vierten Achse 4 wieder nach innen auf einen im Schnittpunkt der vierten Achse 4 und fünften Achse 5 angeordneten sechsten Spiegel 18VI wirft. Von diesem sechsten Spiegel 18VI werden die Laserstrahlen 12 auf das Werkstück selbstverständlich nach Durchlaufen entsprechender Optiken geworfen. Diese Lösung des Strahlenganges ist bereits aus EP 0 901 875 bekannt.

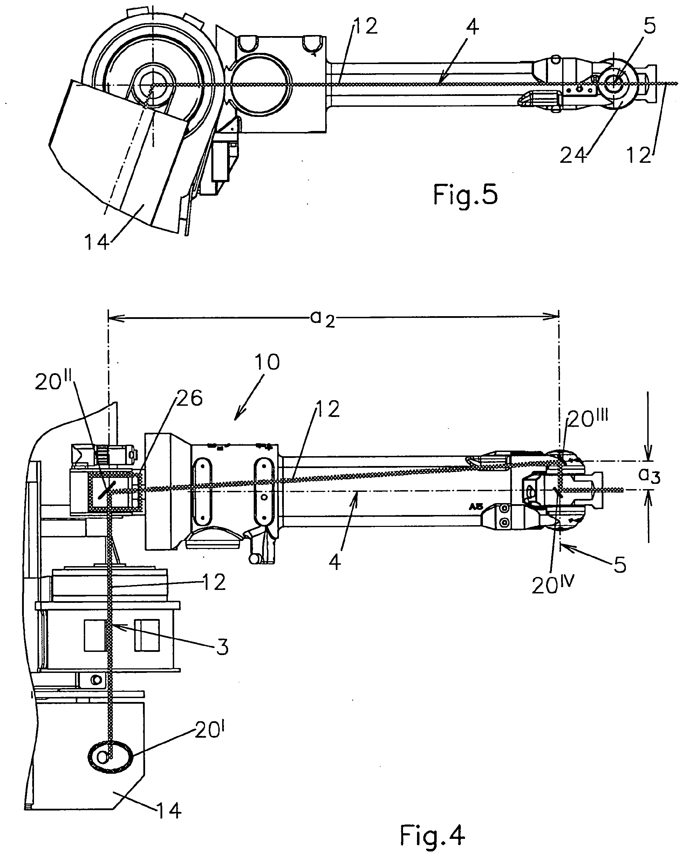

Es ist aber auch möglich, die Strahlführung lediglich mit Hilfe von vier Spiegeln 20I bis 20IV durchzuführen. Dies ist in den Fig.4 und 5 näher dargestellt.

Dazu ist ein erster Spiegel 20I, so angeordnet, daß er den Laser-Rohstrahl der Lasereinrichtung 14 im wesentlichen konzentrisch zur dritten Achse 3 und senkrecht zur vierten Achse 4 auf einen zweiten Spiegel 20II trifft, der in einer Spiegelführung 26 aufgenommen ist und sich in etwa im Schnittpunkt der dritten und vierten Achse 3 und 4 befindet. Von diesem zweiten Spiegel 20II werden die Laserstrahlen 12 bei Drehung der vierten Achse 4 auf eine Kegelhüllfläche definiert zu einem dritten Spiegel 20III geleitet, der auf der fünften Achse 5 innerhalb einer Roboterhand 24 angeordnet ist. Dieser dritte Spiegel 20III bewegt sich wiederum bei einer Drehung der vierten Achse 4 auf einer Kreisbahn und wirft die Laserstrahlen 12 auf einen vierten Spiegel 20IV, welche wiederum die Laserstrahlen 12 auf das Werkstück wirft.

Diese Variante ist also ähnlich wie die Lösung mit sechs Spiegeln mit dem Unterschied, daß der zweite Spiegel 20II über eine über die Spiegelführung 26 die Laserstrahlen 12 bei Drehung der vierten Achse auf eine Kegelhüllfläche definiert zum dritten Spiegel 20III leitet.

Die Spiegelführung 26 besteht aus einem nicht näher bezeichneten Grundkörper, einer nicht näher bezeichneten Spiegelaufnahme sowie einer allgemeinen Übertragung in diesem Fall in Form eines Koppelgetriebes sowie aus einem Verbindungselement. Dadurch ist der Grundkörper der Spiegelführung 26 um die dritte Achse 3 drehbar gelagert. Bei einer Drehung der vierten Achse 4 bewegt sich der dritte Spiegel 20III auf einem Kreis. Um diese Bewegung auf die Spiegelführung 26 zu übertragen, wird ein mechanisches Verbindungselement, das nicht dargestellt ist, zwischen der Spiegelführung 26 und dem dritten Spiegel 20III bzw. der Roboterhand 24 eingesetzt. Obwohl nicht dargestellt, kann dieses Verbindungselement allerdings auch die Bewegung mit Hilfe von Fremdenergie betriebener Aktoren und/oder einer Mischung dieser Übertragungsmöglichkeiten bieten.

Zum Beispiel kann dieses Verbindungselement ein in der Verbindungsachse der zweiten und dritten Spiegel 20II und III liegendes Schutzrohr sein.

Das Verbindungselement ist auf der einen Seite mit dem Grundkörper der Spiegelführung 26 über ein Gelenk verbunden, dessen Achse senkrecht zu dessen Drehachse des Grundkörpers und gleichzeitig durch den Schnittpunkt der dritten und vierten Achsen 3 und 4 geht.

Auf der anderen Seite ist das Verbindungselement mit der Roboterhand 24 verbunden. Bei einer Drehung der vierten Achse 4 wird hierdurch der Grundkörper der Spiegelführung 26 in der Winkellage des Verbindungselmentes synchron mitgeführt. Das Verbindungselement selbst kann in der Verbindungsachse der zweiten und dritten Spiegel 20II und III Drehbewegungen der vierten Achse 4 ausgleichen.

Die Spiegelaufnahme ist in dem Grundkörper in der gleichen Achse wie das Verbindungselement schwenkbar gelagert. In der Spiegelaufnahme wird der zweite Spiegel 20II über einen Spiegelflansch mit Justageeinrichtung montiert. Damit der Laserstrahl 12 bei Auslenkung des Verbindungselementes um dessen Drehachse im Grundkörper definiert in die Verbindungsachse zwischen dem zweiten und dritten Spiegel 20II und III geführt wird, erfolgt eine Zwangskopplung des Verbindungselementes und der Spiegelaufnahme über ein Koppelgetriebe. Dabei ist zu bemerken, daß auch andere Übertragungsarten möglich sind, in diesem Fall allerdings die Art eines Koppelgetriebes gewählt wurde. Auch für die Auswahl eines Getriebes gibt es verschiedene Möglichkeiten.

Das gewählte Koppelgetriebe hat den Aufbau eines Planetengetriebes. Ein Sonnenrad ist dabei fest mit dem Verbindungselement und ein zweites Sonnenrad fest mit der Spiegelaufnahme verbunden. Zwei fest miteinander gleichachsig verbundene Planetenräder sind drehbar an dem Grundkörper befestigt. Bei einer Gesamtuntersetzung zwischen den beiden Sonnenrädern von 0,5 bewegt sich die Spiegelaufnahme genau mit halber Winkelgeschwindigkeit des Verbindungselements. Hierdurch wird der Laserstrahl 12 genau in die Verbindungsachse zwischen den zweiten und dritten Spiegeln 20II und III geführt.

In der in Fig.4 gezeigten Winkelstellung der vierten Achse 4 beträgt der Winkel zwischen der Spiegelfläche des zweiten Spiegels 20II und der vierten Achse 4 in der Schnittebene

$$\alpha 1 = 45° + \arctan a3/a2 * 0,50.$$

Bei einer Drehung der vierten Achse 4 um 180° stellt sich ein Winkel von

$$\alpha 21 = 45° - \arctan a2/a3 * 0,50$$

ein. Hierbei ist der Winkel senkrecht zur Schnittebene jeweils $\alpha 22 = 90°$.

Wird allerdings die vierte Achse 4 aus der gezeigten Stellung um 90° gedreht, so stellt sich über die Spiegelführung 26 in der Schnittebene von a21 = 45° ein.

Der Winkel senkrecht zur Schnittebene beträgt dann je nach Drehrichtung

$$\alpha 22 = 90° \pm \arctan a3/a2.$$

Der dritte Spiegel 20III ist starr in der Roboterhand 24 eingebaut. Der Winkel zwischen der Spiegelfläche des dritten Spiegels und der fünften Achse 5 in der Schnittebene beträgt dabei

$$\alpha 3A = 45° - \arctan a3/a2 * 0,50.$$

Der Winkel senkrecht zu dieser Schnittebene beträgt dabei $\alpha 3B = 90°$.

Obwohl nicht näher dargestellt, ist der Innenraum der gesamten Strahlführung gegenüber der Antriebstechnik der Achsen 1 bis 5 abgedichtet, damit die Möglichkeit des Verschmutzens eines der Spiegel so gering wie möglich ist. Besonders vorteilhaft ist, daß der Antrieb der fünften Achse 5 ein im Schwenkarm integrierter mitdrehender Kleinmotor ist.

Es sind auch aufgrund der besonderen Strahlführung unterschiedliche Armlängen der vierten Achse 4 möglich. Aufgrund des Längenverhältnisses a3/a2 ist der Kippwinkel des zweiten Spiegels 20II relativ klein. Daher eignet sich dieses System für unterschiedliche Armlängen bzw. für unterschiedliche Größen von a2, ohne konstruktive Änderungen der Spiegelführung vornehmen zu müssen.

Grundsätzlich kann die beschriebene Lösung der Spiegelführung auch an anderen Achsen eingesetzt werden, bei denen ein Laserstrahl definiert um etwa 90° $\pm$ $\alpha$ umgelenkt werden soll. Dabei hat es sich herausgestellt, daß es durchaus möglich ist, diesen Winkel $\alpha$ auf bis zu 30° zu wählen.

Des weiteren ist die Lasereinrichtung 14 justierbar ausgestaltet. Dies ermöglicht einerseits die Beseitigung von Maßtoleranzen. Andererseits wird dadurch aber auch ein Verwenden von Lasereinrichtungen unterschiedlichster Art ermöglicht, da mit Hilfe dieser Justage immer eine korrekte Einstellung möglich ist.

Schließlich sei noch bemerkt, daß auch eine beliebig gestaltete Prozeßgaszuführung, die in den Figuren nicht dargestellt ist, Verwendung finden kann. Diese dient insbesondere der Schnittabfallbeseitigung bei der Bearbeitung von Kunststoff. Aufgrund der Anordnung der Lasereinrichtung auf der zweiten Achse 2 kann die Bewegung der Bearbeitungsoptik mit wesentlich höherer Dynamik erfolgen. Die daraus resultierende günstigere Massenverteilung erleichtert des weiteren die Bewegungssteuerung. Die Einhaltung für Randbedingungen für den Lasereinsatz in Verbindung mit Robotern wird dadurch wesentlich unkritischer, da die Baugröße und insbesondere das Gewicht eine untergeordnete Rolle spielen. Die Lasereinrichtung wird nämlich wesentlich geringeren Beschleunigungen und Geschwindigkeiten ausgesetzt, wodurch sich unter anderem auch eine höhere Lebensdauer für die Lasereinrichtung ergibt.

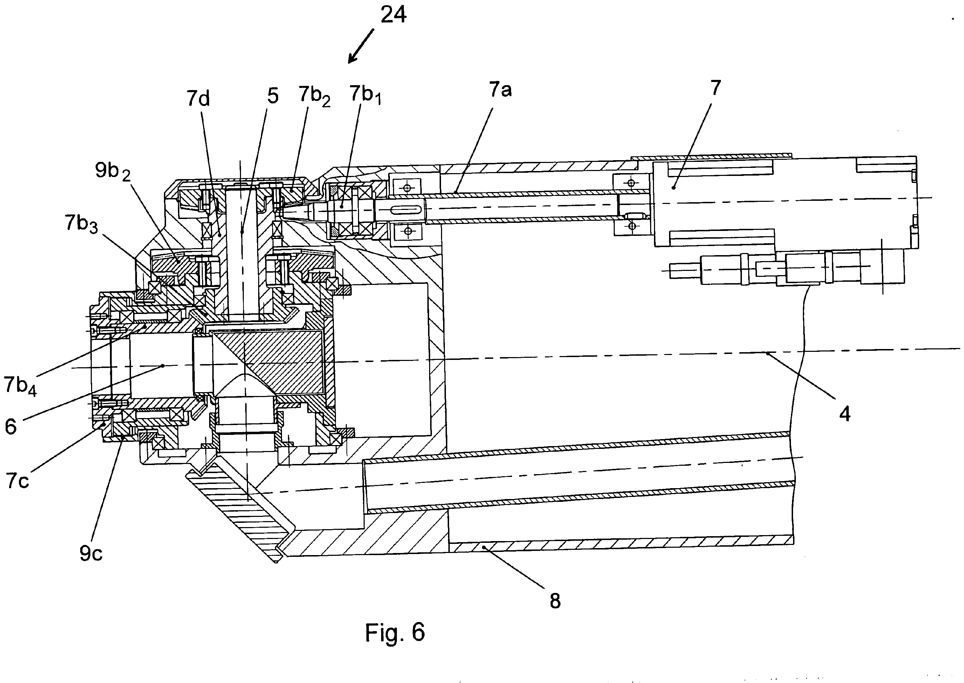

In den Figuren 6 bis 11 ist ein weiteres Ausführungsbeispiel eines Knickarmroboters 10' gezeigt. Bei diesem Knickarmroboter 10' ist in dem Roboterkopf 24 eine sechste Achse 6 angeordnet, die quer zur fünften Achse 5 verläuft.

Ein dazu verwandter Antrieb 7 für die sechste Achse 6 ist in einem Gehäuse 8 für die vierte Achse 4 angeordnet.

In diesem Gehäuse 8 für die vierte Achse 4 ist auch ein weiterer Antrieb 9 für die fünfte Achse 5 angeordnet.

Der Aufbau dieses Knickarmroboters 10' weist selbstverständlich auch alle Merkmale auf, die im Zusammenhang mit den Figuren 1 bis 5 oben beschrieben worden sind. Die Handachsbaugruppe besteht daher weiterhin aus einer Antriebs- und einer Strahlführungsseite. Bei diesem Ausführungsbeispiel des Knickarmroboters 10' ist die Antriebstechnik der sechsten Achse in das Gehäuse 8 der vierten Achse 4 bzw. die Antriebsseite der bestehenden Handachsmechanik zusätzlich integriert.

Die Strahlführungsseite der Handachse der sechsachsigen Lösung ist im Aufbau ähnlich der fünfachsigen Lösung. Dabei ist die Antriebsseite folgendermaßen aufgebaut. Im Gehäuse 8 der vierten Achse 4 sind die beiden Antriebe 7 und 9 der Achsen 6 und 5 so eingebaut, daß die beiden Antriebswellen 7a und 9a parallel zur vierten Achse 4 in Richtung der Handachsbaugruppe bzw. der Rotorhand 24 zeigen. Die Antriebswellen 7a und 9a werden jeweils mit den Getrieben der fünften und sechsten Achse 5 und 6 verbunden. Im vorliegenden Fall werden Kegelradgetriebe 7b und 9b verwandt.

Der Kegelradsatz der fünften Achse 5, der aus einem Kegelradritzel 9b1 und einem Tellerrad 9b2 besteht, ist innen angeordnet und bewegt einen Schwenkflansch 9c der fünften Achse 5. Dieser Radsatz ist hier mit einer Hohlwelle ausgeführt.

Der Kegelradsatz der sechsten Achse 6, der aus einem Kegelradritzel $7b_1$ und einem Tellerrad $7b_2$ besteht, ist außen angeordnet. Über die Antriebswelle 7d wird die Drehbewegung dieses Getriebes durch die Hohlwelle des Getriebes der fünften Achse 5 auf einen weiteren Kegelradsatz, der aus einem Kegelradritzel $7b_3$ und einem Antriebsrad $7b_4$ besteht, übertragen. Das Antriebsrad dieses Kegelradsatzes ist ebenfalls als Hohlwelle ausgeführt und wirkt direkt auf den drehbar gelagerten Antriebsflansch 7c der sechsten Achse 6. Durch diese Hohlwelle wird der Laserrohstrahl 12 geleitet.

Zur Erhöhung der Gesamtübersetzung ist es möglich, zwischen den beiden Antrieben 7 und 9 und den Eingangsritzeln der Kegelradgetriebe der Handachse jeweils eine weitere Getriebestufe oder allgemein ein weiteres Getriebe einzusetzen. In diesem Fall wird an jedem der beiden Antriebe 7 und 9 ein z.B. einstufiges Stirnradgetriebe montiert. Um kompakter bauen zu können, ist es vorteilhaft, wenn die beiden Getriebe in einem gemeinsamen Gehäuse integriert sind. Dies ist in den Figuren nicht dargestellt.

Weiterhin ist es von Vorteil, Kegelradgetriebe in Hypoidbauform zu verwenden, da diese bei wechselseitiger Anordnung der Tellerräder $7b_2$ und $9b_2$ einen größeren Achsabstand der Ritzelwellen bzw. Eingangsräder ergeben. Hierdurch wird die Handachsbaugruppe sehr kompakt und besitzt kleine Störkonturen.

Im folgenden werden mehrere Strahlführungsvarianten beschrieben.

Zunächst wird die Strahlführung für den Einsatz fasergeführter, stationärer Laser beschrieben. Dabei gibt es zwei mögliche Ausführungsvarianten.

Zum einen ist es möglich, die Zuführung der Faser seitlich am Schwenkarm der zweiten Achse 2 anzuordnen, so daß der Strahlaustritt senkrecht auf die dritte Achse 3 gerichtet ist. Dies ist vom Prinzip her ähnlich wie die Strahleinkopplung bei der Strahlführung eines $CO_2$-Lasers Hinter dem Faseranschluß bzw. dem Faserstecker ist eine Kollimationsoptik bzw. ein Kollimationsmodul angeordnet, das den Laserrohstrahl 12 auf den erforderlichen Rohstrahldurchmesser formt. Die Strahlführung ist vom Aufbau identisch zu den oben unter Bezugnahme auf die Figuren 1 bis 5 beschriebenen Knickarmroboter bei der Verwendung von vier oder sechs Spiegeln.

Dies bedeutet, daß der Strahl 12 über den ersten Spiegel 18I konzentrisch zur dritten Achse 3 weitergeleitet wird. Ab hier ist dann die Beschreibung bezüglich der Figuren 1 bis 5 voll zu übernehmen.

Zum anderen ist es möglich die Zuführung der Faser konzentrisch zur dritten Achse 3 auszuführen, so daß der Strahlaustritt senkrecht auf den im Schnittpunkt der dritten Achse 3 mit der vierten Achse 4 angeordneten Spiegel 18II gerichtet ist.

Hinter dem Faseranschluß bzw. Faserstecker ist ebenfalls eine Kollimationsoptik bzw. Kollimationsmodul angeordnet, das den Laserrohstrahl 12 auf den erforderlichen Rohstrahldurchmesser formt.

Ab dem im Schnittpunkt der dritten Achse 3 mit der vierten Achse 4 angeordneten Spiegel 18III kommt die Strahlführung entsprechend der Beschreibung bezüglich der Figuren 1 bis 5 zum Einsatz, wobei in diesem Fall allerdings der erste Spiegel 18I entfällt. Dies bedeutet, daß hier nur drei oder fünf Spiegel benötigt werden.

Neben dem Einsatz an den oben beschriebenen Knickarmrobotern 10 und 10' ist diese Lösung auch an anderen Kinematiken, z.B. einem 5- oder 6-achsigen Portalroboter möglich. Ein solcher Portalroboter besteht aus drei Linearachsen, die jeweils im rechten Winkel zueinander angeordnet sind. An der Vertikalachse ist je nach Ausführung eine Baugruppe mit zwei bzw. drei zusätzlichen Handachsen angebaut. Diese Baugruppe ist der komplette Unterarm des bereits beschriebenen Knickarmroboters. Dies ist in den Figuren nicht gezeigt.

Bei diesem Knickarmroboter wird die Faser von außen bis zu Anschlußstelle am Oberarm, seitlich am Schwenkarm, freihängend oder unterstützt durch Balancer bzw. federbelasteten Seilzügen zum Knickarmroboter geführt.

Bei dem Portalroboter kann die Faser in den drei Grundachsen bzw. Linearachsen in Energieketten mit ausreichenden Biegeradien torsionsfrei verlegt werden. Eine Zuführung freihängend wie bei einem Knickarmroboter ist ebenfalls möglich. Auch dies ist in den Figuren nicht gezeigt.

Dies hat folgende Vorteile. Die zur Strahlführung verwendeten Fasern sind sehr empfindlich speziell auf Torsionsbelastung. Weiterhin dürfen die zusätzlichen Biegeradien nicht unterschritten werden. Bei den beschriebenen Ausführungsbeispielen wird die Faser nicht torsionsbelastet. Hier werden sehr hohe Standzeiten der Faser erreicht. Bei konventionellen Systemen erfolgt die Strahlzuführung direkt an der Bearbeitungsoptik. Die Faser wird seitlich zugeführt und die Baugröße des Kollimationsmoduls, des Fasersteckers und des großen Biegeradius der Faser ergeben große Störkonturen. Bei der oben beschriebenen Lösung gibt es keine zusätzlichen Anbauten an den Handachsen. Die Beweglichkeit und Zugänglichkeit des Roboters bleibt voll erhalten.

Bei konventionellen Systemen entsteht durch die Strahlzuführung aufgrund der zusätzlichen Massen und Massenträgheiten eine dynamische Beeinflussung der Roboterachsen, die sich auf die Bahngenauigkeit negativ auswirkt. Diese Effekte treten bei der oben beschriebenen integrierten Strahlung nicht auf.

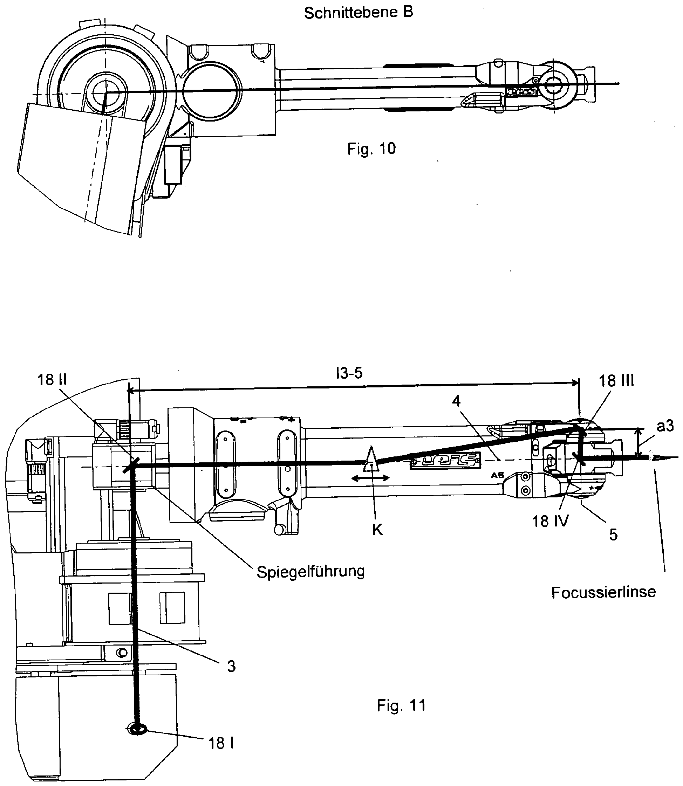

Es ist aber auch eine Strahlführung mit vier Spiegeln möglich. Anstatt des Einsatzes einer Spiegelführung, wie oben unter Bezugnahme auf die Figuren 1 bis 5 beschrieben, ist es für alle Ausführungsbeispiele möglich, den Laserrohstrahl 12 durch den Einsatz eines prismatischen optischen Elements K bzw. Strahlablenkprisma auf eine Kegelhüllfläche zum dritten Spiegel 18III zu führen. Das prismatische optische Element K ist auf der vierten Achse 4 mitdrehend montiert. Der Laserstrahl 12 wird vom zweiten Spiegel 18II konzentrisch zu der vierten Achse 4 geleitet. Durch das prismatische Element K wird der Laserstrahl 12 in einem durch den Winkel des optischen Elements K definierten Winkel zum dritten Spiegel 18III weitergeleitet. Dabei kann eine Strahljustage durch Verschieben bzw. Drehen des Elementes K erfolgen. Dies ist besonders deutlich aus Fig.11 entnehmbar.

Bezugszeichenliste:

| | |
|---|---|
| 1 | erste Achse |
| 2 | zweite Achse |
| 3 | dritte Achse |
| 4 | vierte Achse |
| 5 | fünfte Achse |
| 6 | sechste Achse |
| 7 | Antrieb für sechste Achse |
| 7a | Antriebswelle |
| 7b | Kegelradgetriebe |
| 7c | Antriebsflansch |
| 7d | Antriebswelle |
| 8 | Gehäuse für vierte Achse |
| 9 | weiterer Antrieb |
| 9a | weitere Antriebswelle |
| 9b | weiteres Kegelradgetriebe |
| 9c | Schwenkflansch |
| 10 | Knickarmroboter |
| 12 | Laserstrahl |
| 14 | Lasereinrichtung |
| 18I | erster Spiegel |
| 18II | zweiter Spiegel |
| 18III | dritter Spiegel |
| 18IV | vierter Spiegel |
| 18V | fünfter Spiegel |
| 18IV | sechster Spiegel |
| 20I | erster Spiegel |
| 20II | zweiter Spiegel |
| 20III | dritter Spiegel |
| 20IV | vierter Spiegel |
| 24 | Roboterhand |
| 26 | Spiegelführung |
| α | Winkel |
| K | optisches Element, Strahlablenkprisma |

**Patentansprüche**

1.  Knickarmroboter (10) für die Bearbeitung von Werkstücken mittels Laserstrahlung (12), mit mindestens erste bis fünfte Achsen (1,2,3,4,5) und mit einer Lasereinrichtung (14) **dadurch gekennzeichnet, daß** die Lasereinrichtung (14) an der zweiten Achse (2) angeordnet und die damit erzeugbaren Laserstrahlen (12) vor ihrem Auftreffen auf das Werkstück im wesentlichen innerhalb der dritten bis fünften Achsen (3,4,5) führbar sind und daß in einem Roboterkopf (24) eine sechste Achse (6) angeordnet ist, die quer zur fünften Achse (5) verläuft.

2.  Knickarmroboter nach Anspruch 1, **dadurch gekennzeichnet, daß** ein Antrieb (7) für die sechste Achse (6) in einem Gehäuse (8) für die vierte Achse (4) angeordnet ist.

3. Knickarmroboter nach Anspruch 1 oder 2, **dadurch gekennzeichnet, daß** in einem bzw. dem Gehäuse (8) für die vierte Achse (4) ein weiterer Antrieb (9) für die fünfte Achse (5) angeordnet ist.

4. Knickarmroboter nach Anspruch 3, **dadurch gekennzeichnet, daß** der Antrieb (7) für die sechste Achse (6) und der weitere Antrieb (9) für die fünften Achse (5) in dem Gehäuse (8) derart angeordnet sind, daß erste (7a) und zweite Antriebswellen (9a) der beiden Antriebe (7,9) parallel zur vierten Achse (4) in Richtung der Rotorhand (24) weisen.

5. Knickarmroboter nach Anspruch 4, **dadurch gekennzeichnet, daß** die Antriebswellen (7a, 9a) entsprechende Kegelradgetriebe (7b,9b) antreiben.

6. Knickarmroboter nach einem der Ansprüche 1 bis 5, **dadurch gekennzeichnet, daß** im Betriebszustand der Laser-Rohstrahl im wesentlichen seitlich entlang der Armstruktur zwischen der zweiten und der dritten Achse (2,3) verläuft und im wesentlichen senkrecht auf die dritte Achse (3) trifft.

7. Knickarmroboter nach einem der Ansprüche 1 oder 6, **dadurch gekennzeichnet, daß** die dritte Achse (3) als antreibbare Hohlwelle (16) ausgeführt ist.

8. Knickarmroboter nach einem der Ansprüche 1 bis 7, **dadurch gekennzeichnet, daß** im Betriebszustand die Laserstrahlen (12) über ein mehrere Spiegel (18I-VI, 20I-IV) aufweisendes Strahlführungssystem (22) auf das Wertstück leitbar sind und daß dieses Strahlführungssystem (22) innerhalb der dritten bis fünften Achse (3,4,5) angeordnet ist.

9. Knickarmroboter nach Anspruch 8, **dadurch gekennzeichnet, daß** die Spiegel (16I-VI, 20I-IV) derart angeordnet sind, daß im Betriebszustand die Laserstrahlen (12) im Bereich der fünften Achse (5) bzw. der Roboterhand (24) von der vierten Achse (4) versetzt auf die fünfte Achse (5) auftreffen und anschließend über Spiegel (18V, VI; 20III, IV) auf das Werkstück geworfen werden.

10. Knickarmroboter nach Anspruch 9, **dadurch gekennzeichnet, daß** die Laserstrahlen (12) über Spiegel (18I-VI) leitbar sind.

11. Knickarmroboter nach Anspruch 10, **dadurch gekennzeichnet, daß** ein erster Spiegel (18I) so angeordnet ist, daß er den Laser-Rohatrahl der Lasereinrichtung (14) im wesentlichen konzentrisch zur dritten Achse (3) auf einen zweiten Spiegel (18II) wirft, der die Laserstrahlen im wesentlichen konzentrisch zur vierten Achse (4) auf einen dritten Spiegel (18III) wirft und daß zur freien Drehbarkeit der fünften Achse (5) bzw. der dazu gehörenden Roboterhand (24) dieser dritte Spiegel (18III) die Laserstrahlen (12) quer zur vierten Achse (4) nach außen auf einen vierten Spiegel (18IV) wirft, dieser die Laserstrahlen (12) in etwa parallel zur vierten Achse (4) auf einen fünften Spiegel (18V) wirft, der die Laserstrahlen (12) quer zur vierten Achse (4) wieder nach innen auf einen im Schnittpunkt der vierten und fünften Achse (4,5) angeordneten sechsten Spiegel (18VI) wirft, von wo aus die Laserstrahlen (12) auf das Werkstück geworfen werden.

12. Knickarmroboter nach Anspruch 9, **dadurch gekennzeichnet, daß** die Laserstrahlen (12) über vier Spiegel (20I-IV) auf das Werkstück leitbar sind.

13. Knickarmroboter nach Anspruch 12, **dadurch gekennzeichnet, daß** ein erster Spiegel (20I) so angeordnet ist, daß der Laser-Rohstrahl der Lasereinrichtung (14) im wesentlichen konzentrisch zur dritten Achse (3) und senkrecht zur vierten Achse (4) auf einen zweiten Spiegel (20II) trifft, der in einer Spiegelführung (26) aufgenommen ist und die Laserstrahlen (12) bei Drehung der vierten Achse (4) auf einer Kegelhüllfläche definiert zum dritten Spiegel (20III) leitet, der sich wiederum bei einer Drehung der vierten Achse (4) auf einer Kreisbahn bewegt und die Laserstrahlen (12) auf einen vierten Spiegel (20IV) leitet, welcher die Laserstrahlen (12) auf das Werkstück wirft.

14. Knickarmroboter nach Anspruch 13, **dadurch gekennzeichnet, daß** die Spiegelführung (26) aus einem Grundkörper, einer Spiegelaufnahme, einem Koppelgetriebe und einem Verbindungselement besteht, wobei der Grundkörper der Spiegelführung (26) um die dritte Achse (3) drehbar gelagert ist.

15. Knickarmroboter nach Anspruch 13 oder 14, **dadurch gekennzeichnet, daß** die kreisbahnförmige Bewegung des dritten Spiegels (20III) mittels eines Verbindungselements auf die Spiegelführung (26) übertragbar ist.

**16.** Knickarmroboter nach Anspruch 15, **dadurch gekennzeichnet, daß** das Verbindungselement mechanisch zwangsgeführt ist oder durch mit Fremdenergie betriebenen Aktoren bewegt wird.

**17.** Knickarmroboter nach Anspruch 16, **dadurch gekennzeichnet, daß** das mechanische Verbindungselement ein in der Verbindungsachse beider Spiegel (20II, 20III) liegendes Schutzrohr ist.

**18.** Knickarmroboter nach einem der Ansprüche 17 bis 17, **dadurch gekennzeichnet, daß** das Verbindungselement auf der einen Seite mit dem Grundkörper der Spiegelführung (26) über ein Gelenk verbunden ist, dessen Achse senkrecht zur Drehachse des Grundkörpers und gleichzeitig durch den Schnittpunkt der dritten und vierten Achsen (3,4) geht, und auf der anderen Seite mit der Roboterhand (24) verbunden ist.

**19.** Knickarmroboter nach einem der Ansprüche 14 bis 18, **dadurch gekennzeichnet, daß** das Koppelgetriebe das Verbindungselement mit der Spiegelaufnahme verbindet und den Aufbau eines Planetengetriebes aufweist.

**20.** Knickarmroboter nach Anspruch 19, **dadurch gekennzeichnet, daß** ein Sonnenrad des Planetengetriebes fest mit dem Verbindungselement verbunden ist und ein zweites Sonnenrad fest mit der Spiegelaufnahme verbunden ist, wobei zwei fest miteinander gleichachsig verbundene Planetenräder drehbar an dem Grundkörper angeschlossen sind.

**21.** Knickarmroboter nach einem der Ansprüche 12 bis 20, **dadurch gekennzeichnet, daß** der Winkel zwischen der Spiegelfläche des zweiten Spiegels (20II) und der vierten Achse (4) in der Schnittebene wie folgt ermittelbar ist:

$$\alpha2 = 45° \pm \text{arctan } a3/a2 * 0,5,$$

wobei a2 der Abstand zwischen dem zweiten und dritten Spiegel (20II, 20III) und a3 der Abstand zwischen dem dritten und vierten Spiegel (20III, 20IV) voneinander bedeuten und das Vorzeichen von der Lage der vierten Achse (4) im Raum abhängt.

**22.** Knickarmroboter nach einem der Ansprüche 12 bis 21, **dadurch gekennzeichnet, daß** der Winkel zwischen der Spiegelfläche des dritten Spiegels (20III) und der fünften Achse (5) in der Schnittebene wie folgt ermittelbar ist:

$$\alpha3A = 45° - \text{arctan } a3/a2 * 0,5$$

wobei a2 der Abstand zwischen dem zweiten und dritten Spiegel (20II, 20III) und a3 der Abstand zwischen dem dritten und vierten Spiegel (20III, 20IV) voneinander bedeuten.

**23.** Knickarmroboter nach einem der Ansprüche 1 bis 22, **dadurch gekennzeichnet, daß** der Innenraum der gesamten Strahlführung gegenüber der Antriebstechnik der Achsen (1, 2, 3, 4, 5) abgedichtet ist.

**24.** Knickarmroboter nach einem der Ansprüche 1 bis 23, **dadurch gekennzeichnet, daß** die Lasereinrichtung (14) justierbar ausgestaltet ist.

**25.** Knickarmroboter nach einem der Ansprüche 1 bis 24, **dadurch gekennzeichnet, daß** die Länge der vierten Achse (4) geeignet vorwählbar ist.

**26.** Knickarmroboters nach einem der Ansprüche 1 bis 25, **dadurch gekennzeichnet, daß** eine beliebig gestaltete Prozeßgaszuführung vorhanden ist .

**27.** Knickarmroboter nach einem der Ansprüche 1 bis 26, **dadurch gekennzeichnet, daß** die Lasereinrichtung (14) bezüglich der Laserstrahlenerzeugungsart frei wählbar ist.

**28.** Knickarmroboter nach einem der Ansprüche 1 bis 27, **dadurch gekennzeichnet, daß** über fasergeführte Laser die Strahlführung erfolgt.

**29.** Knickarmroboter nach einem der Ansprüche 1 bis 27, **dadurch gekennzeichnet, daß** über vier Spiegel (18I-IV) sowie einem optischen Element (K) die Strahlführung erfolgt.

**30.** Knickarmroboter nach einem der Ansprüche 1 bis 29, **dadurch gekennzeichnet, daß** das optische Element ein Strahlablenkprisma (K) ist.

**Claims**

**1.** Articulated robot (10) for machining workpieces with laser radiation (12), having at least first to fifth axes (1, 2, 3, 4, 5) and having a laser device (14), **characterised in that** the laser device (14) is disposed on the second axis (2) and the laser beams (12) which can be produced thereby can be guided substantially within the third to fifth axes (3, 4, 5) before striking the workpiece and that a sixth axis (6) is disposed in a robot head (24) and extends transversely to the fifth axis (5).

**2.** Articulated robot as claimed in claim 1, **characterised in that** a drive (7) for the sixth axis (6) is disposed in a housing (8) for the fourth axis (4).

**3.** Articulated robot as claimed in claim 1 or 2, **characterised in that** a further drive (9) for the fifth axis (5) is disposed in a or the housing (8) for the fourth axis (4).

**4.** Articulated robot as claimed in claim 3, **characterised in that** the drive (7) for the sixth axis (6) and the further drive (9) for the fifth axis (5) are disposed in the housing (8) in such a way that the first drive shaft (7a) and the second drive shaft (9a) of the two drives (7, 9) point in parallel with the fourth axis (4) in the direction of the rotor hand (24).

**5.** Articulated robot as claimed in claim 4, **characterised in that** drive shafts (7a, 9a) drive corresponding bevel gears (7b, 9b).

**6.** Articulated robot as claimed in any one of claims 1 to 5, **characterised in that**, in the operating state, the laser raw beam extends substantially laterally along the arm structure between the second and third axes (2, 3) and strikes the third axis (3) substantially perpendicularly.

**7.** Articulated robot as claimed in any one of claims 1 or 6, **characterised in that** the third axis (3) is designed as a drivable hollow shaft (16).

**8.** Articulated robot as claimed in any one of claims 1 to 7, **characterised in that**, in the operating state, the laser beams (12) can be guided onto the workpiece via a beam guiding system (22) comprising a plurality of mirrors (18I-VI, 20I-IV), and that this beam guiding system (22) is disposed within the third to fifth axes (3, 4, 5).

**9.** Articulated robot as claimed in claim 8, **characterised in that** the mirrors (18I-VI, 20I-IV) are disposed such that, in the operating state, the laser beams (12) in the region of the fifth axis (5) or the robot hand (24), being offset from the fourth axis (4), strike the fifth axis (5) and are then directed onto the workpiece via mirrors (18V, VI; 20III, IV).

**10.** Articulated robot as claimed in claim 9, **characterised in that** the laser beams (12) can be guided via mirrors (18I-VI).

**11.** Articulated robot as claimed in claim 10, **characterised in that** a first mirror (181) is disposed such that it directs the laser raw beam of the laser device (14) substantially concentrically to the third axis (3) onto a second mirror (1811) which directs the laser beams substantially concentrically to the fourth axis (4) onto a third mirror (18III), and that in order to provide free rotatability of the fifth axis (5) or the robot hand (24) associated therewith this third mirror (18III) directs the laser beams (12) transversely to the fourth axis (4) outwardly onto a fourth mirror (18IV), this mirror directs the laser beams (12) approximately in parallel with the fourth axis (4) onto a fifth mirror (18V) which directs the laser beams (12) transversely to the fourth axis (4) inwardly onto a sixth mirror (18VI) disposed at the intersection of the fourth and fifth axes (4, 5), from where the laser beams (12) are directed onto the workpiece.

**12.** Articulated robot as claimed in claim 9, **characterised in that** the laser beams (12) can be guided onto the workpiece via four mirrors (20I-IV).

**13.** Articulated robot as claimed in claim 12, **characterised in that** a first mirror (201) is disposed such that the laser raw beam of the laser device (14) strikes a second mirror (2011) substantially concentrically to the third axis (3) and perpendicularly to the fourth axis (4), said second mirror is received in a mirror guide (26) and guides the laser beams (12) upon rotation of the fourth axis (4) on a conical envelope surface in a defined way with respect to the third mirror (20III) which in turn moves on a circular path upon rotation of the fourth axis (4) and guides the laser beams (12) onto a fourth mirror (20IV) which directs the laser beams (12) onto the workpiece.

14. Articulated robot as claimed in claim 13, **characterised in that** the mirror guide (26) consists of a base body, a mirror receiver, a coupling gear and a connecting element, wherein the base body of the mirror guide (26) is mounted so as to be able to rotate about the third axis (3).

15. Articulated robot as claimed in claim 13 or 14, **characterised in that** the movement of the third mirror (20III) on a circular path can be transmitted to the mirror guide (26) by a connecting element.

16. Articulated robot as claimed in claim 15, **characterised in that** the connecting element is mechanically positively driven or is moved by actuators operated by external energy.

17. Articulated robot as claimed in claim 16, **characterised in that** the mechanical connecting element is a protective pipe on the connecting axis of the two mirrors (20II, 20III).

18. Articulated robot as claimed in any one of claims 17 to 17 *[sic],* **characterised in that** the connecting element is connected on one side to the base body of the mirror guide (26) via a hinge, the axis of which extends perpendicularly to the axis of rotation of the base body and at the same time passes through the point of intersection of the third and fourth axes (3, 4) and is connected on the other side to the robot hand (24).

19. Articulated robot as claimed in any one of claims 14 to 18, **characterised in that** the coupling gear connects the connecting element to the mirror receiver and has the structure of a planetary gear.

20. Articulated robot as claimed in claim 19, **characterised in that** a sun wheel of the planetary gear is fixedly connected to the connecting element, and a second sun wheel is fixedly connected to the mirror receiver, wherein two planet wheels fixedly connected to one another on the same axis are rotatably attached to the base body.

21. Articulated robot as claimed in any one of claims 12 to 20, **characterised in that** the angle between the mirror surface of the second mirror (2011) and the fourth axis (4) in the intersecting plane can be determined as follows:

$$\alpha 2 = 45° \pm \arctan a3/a2 * 0.5,$$

wherein a2 represents the distance between the second and third mirrors (20II, 20III) and a3 represents the distance between the third and fourth mirrors (20III, 20IV) relative to one another and the sign depends on the position of the fourth axis (4) in space.

22. Articulated robot as claimed in any one of claims 12 to 21, **characterised in that** the angle between the mirror surface of the third mirror (20III) and the fifth axis (5) in the intersecting plane can be determined as follows:

$$\alpha 3A = 45° - \arctan a3/a2 * 0.5,$$

wherein a2 represents the distance between the second and third mirrors (2011, 20III) and a3 represents the distance between the third and fourth mirrors (20III, 20IV) relative to one another.

23. Articulated robot as claimed in any one of claims 1 to 22, **characterised in that** the interior of the whole beam guide is sealed with respect to the drive system of the axes (1, 2, 3, 4, 5).

24. Articulated robot as claimed in any one of claims 1 to 23, **characterised in that** the laser device (14) is adjustable.

25. Articulated robot as claimed in any one of claims 1 to 24, **characterised in that** the length of the fourth axis (4) can be suitably preselected.

**26.** Articulated as claimed in any one of claims 1 to 25, **characterised in that** a process gas supply of any design is provided.

**27.** Articulated robot as claimed in any one of claims 1 to 26, **characterised in that** the laser device (14) can be freely selected with respect to the type of laser beam generation.

**28.** Articulated robot as claimed in any one of claims 1 to 27, **characterised in that** the beam guidance is effected via fibre-guided lasers.

**29.** Articulated robot as claimed in any one of claims 1 to 27, **characterised in that** the beam guidance is effected via four mirrors (18I-IV) and an optical element (K).

**30.** Articulated robot as claimed in any one of claims 1 to 29, **characterised in that** the optical element is a beam diverting prism (K).

## Revendications

**1.** Robot à bras articulé (10) pour l'usinage de pièces au moyen d'un rayon laser (12), avec au moins des premier à cinquième axes (1, 2, 3, 4, 5) et avec un système laser (14), **caractérisé en ce que** le système laser (14) est disposé au niveau du deuxième axe (2), et les rayons laser (12) pouvant être générés par celui-ci peuvent être guidés sensiblement à l'intérieur du troisième au cinquième axe (3, 4, 5) avant qu'ils n'atteignent la pièce, et que dans la tête de robot (24) est disposé un sixième axe (6) qui s'étend de manière transversale par rapport au cinquième axe (5).

**2.** Robot à bras articulé selon la revendication 1, **caractérisé en ce qu'**un entraînement (7) pour le sixième axe (6) est disposé dans un boîtier (8) pour le quatrième axe (4).

**3.** Robot à bras articulé selon la revendication 1 ou 2, **caractérisé en ce qu'**un autre entraînement (9) pour le cinquième axe (5) est disposé dans un ou le boîtier (8) pour le quatrième axe (4).

**4.** Robot à bras articulé selon la revendication 3, **caractérisé en ce que** l'entraînement (7) pour le sixième axe (6) et l'autre entraînement (9) pour le cinquième axe (5) sont disposés dans le boîtier (8) de telle manière que des premiers (7a) et des deuxièmes arbres d'entraînement (9a) des deux entraînements (7, 9) pointent en direction de la main de robot (24) de manière parallèle par rapport au quatrième axe (4).

**5.** Robot à bras articulé selon la revendication 4, **caractérisé en ce que** les arbres d'entraînement (7a, 9a) entraînent des engrenages coniques (7b, 9b) correspondants.

**6.** Robot à bras articulé selon l'une quelconque des revendications 1 à 5, **caractérisé en ce que** dans l'état de fonctionnement, le rayon brut laser s'étend sensiblement latéralement le long de la structure de base entre le deuxième et le troisième axe (2, 3) et atteint sensiblement de manière perpendiculaire le troisième axe (3).

**7.** Robot à bras articulé selon l'une quelconque des revendications 1 ou 6, **caractérisé en ce que** le troisième axe (3) est réalisé sous la forme d'un arbre creux (16) pouvant être entraîné.

**8.** Robot à bras articulé selon l'une quelconque des revendications 1 à 7, **caractérisé en ce que** dans l'état de fonctionnement, les rayons laser (12) peuvent être acheminés sur la pièce par l'intermédiaire d'un système de guidage de rayon (22) présentant plusieurs miroirs (18I-VI, 20I-IV), et que ledit système de guidage de rayon (22) est disposé à l'intérieur du troisième au cinquième axe (3, 4, 5).

**9.** Robot à bras articulé selon la revendication 8, **caractérisé en ce que** les miroirs (18I-VI, 20I-IV) sont disposés de telle manière que dans l'état de fonctionnement les rayons laser (12) atteignent le cinquième axe (5) dans la zone du cinquième axe (5) ou de la main de robot (24) avec un décalage par rapport au quatrième axe (4) et sont renvoyés ensuite par l'intermédiaire de miroirs (18V, VI ; 20III, IV) sur la pièce.

**10.** Robot à bras articulé selon la revendication 9, **caractérisé en ce que** les rayons laser (12) peuvent être acheminés par l'intermédiaire de miroirs (18I-VI).

**11.** Robot à bras articulé selon la revendication 10, **caractérisé en ce qu'**un premier miroir (18I) est disposé de telle sorte qu'il renvoie le rayon laser du système de laser (14) sensiblement de manière concentrique par rapport au troisième axe (3) sur un deuxième miroir (18II), qui renvoie les rayons laser sensiblement de manière concentrique par rapport au quatrième axe (4) sur un troisième miroir (18III), et qu'aux fins de la liberté de rotation du cinquième axe (5) ou de la main de robot (24) associée, ledit troisième miroir (18III) renvoie les rayons laser (12) de manière transversale par rapport au quatrième axe (4) vers l'extérieur sur un quatrième miroir (18IV), ce dernier renvoie les rayons laser (12) à peu près de manière parallèle par rapport au quatrième axe (4) sur un cinquième miroir (18V), qui renvoie les rayons laser (12) de manière transversale par rapport au quatrième axe (4) à nouveau vers l'intérieur sur un sixième miroir (18VI) disposé dans le point d'intersection du quatrième et du cinquième axe (4, 5), d'où les rayons laser (12) sont renvoyés sur la pièce.

**12.** Robot à bras articulé selon la revendication 9, **caractérisé en ce que** les rayons laser (12) peuvent être acheminés sur la pièce par l'intermédiaire de quatre miroirs (20I-IV).

**13.** Robot à bras articulé selon la revendication 12, **caractérisé en ce qu'**un premier miroir (20I) est disposé de telle sorte que le rayon brut laser du système de laser (14) atteint un deuxième miroir (20II) sensiblement de manière concentrique par rapport au troisième axe (3) et de manière perpendiculaire par rapport au quatrième axe (4), lequel deuxième miroir est logé dans un guidage de miroir (26) et achemine les rayons laser (12), lors de la rotation du quatrième axe (4), de manière définie sur une surface d'enveloppement conique, par rapport au troisième miroir (20III), qui se déplace à nouveau lors d'une rotation du quatrième axe (4) sur une trajectoire et achemine les rayons laser (12) sur un quatrième miroir (20IV), qui renvoie les rayons laser (12) sur la pièce.

**14.** Robot à bras articulé selon la revendication 13, **caractérisé en ce que** le guidage de miroir (26) est constitué d'un corps de base, d'un logement de miroir, d'un engrenage de couplage et d'un élément de liaison, dans lequel le corps de base du guidage de miroir (26) est monté de manière à pouvoir tourner autour du troisième axe (3).

**15.** Robot à bras articulé selon la revendication 13 ou 14, **caractérisé en ce que** le déplacement en forme de trajectoire du troisième miroir (20III) peut être transmis sur le guidage de miroir (26) au moyen d'un élément de liaison.

**16.** Robot à bras articulé selon la revendication 15, **caractérisé en ce que** l'élément de liaison est guidé à force de manière mécanique ou est déplacé par des actionneurs fonctionnant avec une énergie extérieure.

**17.** Robot à bras articulé selon la revendication 16, **caractérisé en ce que** l'élément de liaison mécanique est un tube de protection situé dans l'axe de liaison de deux miroirs (20II, 20III).

**18.** Robot à bras articulé selon l'une quelconque des revendications 17 à 17, **caractérisé en ce que** l'élément de liaison est relié sur un côté au corps de base du guidage de miroir (26) par l'intermédiaire d'une articulation, dont l'axe est perpendiculaire à l'axe de rotation du corps de base et traverse de manière simultanée le point d'intersection du troisième et du quatrième axe (3, 4), et est relié sur l'autre côté à la main de robot (24).

**19.** Robot à bras articulé selon l'une quelconque des revendications 14 à 18, **caractérisé en ce que** l'engrenage de couplage relie l'élément de liaison au logement de miroir et présente la structure d'un engrenage planétaire.

**20.** Robot à bras articulé selon la revendication 19, **caractérisé en ce qu'**une roue solaire de l'engrenage planétaire est reliée de manière solidaire à l'élément de liaison, et une deuxième roue solaire est reliée de manière solidaire au logement de miroir, dans lequel deux pignons satellites reliés sur le même axe l'un à l'autre de manière solidaire sont raccordés de manière à pouvoir tourner au corps de base.

**21.** Robot à bras articulé selon l'une quelconque des revendications 12 à 20, **caractérisé en ce que** l'angle entre la surface de miroir du deuxième miroir (20II) et le quatrième axe (4) peut être déterminé dans le plan d'intersection comme suit :

$$\alpha 2 = 45° \pm \text{arctan } a3/a2 * 0,5,$$

dans lequel a2 représente la distance entre le deuxième et le troisième miroir (20II, 20III) et a3 la distance entre le troisième et le quatrième miroir (20III, 20IV) et le signe algébrique dépend de la position du quatrième axe (4) dans l'espace.

**22.** Robot à bras articulé selon l'une quelconque des revendications 12 à 21, **caractérisé en ce que** l'angle entre la surface de miroir du troisième miroir (20III) et le cinquième axe (5) peut être déterminé dans le plan d'intersection comme suit :

$$\alpha 3A = 45° - \arctan a3/a2 * 0,5$$

dans lequel a2 représente la distance entre le deuxième et le troisième miroir (20II, 20III) et a3 la distance entre le troisième et le quatrième miroir (20III, 20IV).

**23.** Robot à bras articulé selon l'une quelconque des revendications 1 à 22, **caractérisé en ce que** l'espace intérieur de l'ensemble du guidage de rayon est étanchéifié par rapport à la technique d'entraînement des axes (1, 2, 3, 4, 5).

**24.** Robot à bras articulé selon l'une quelconque des revendications 1 à 23, **caractérisé en ce que** le système de laser (14) est configuré de manière à pouvoir être ajusté.

**25.** Robot à bras articulé selon l'une quelconque des revendications 1 à 24, **caractérisé en ce que** la longueur du quatrième axe (4) peut être choisie au préalable de manière appropriée.

**26.** Robot à bras articulé selon l'une quelconque des revendications 1 à 25, **caractérisé en ce qu'**une arrivée de gaz de processus configurée de manière quelconque est présente.

**27.** Robot à bras articulé selon l'une quelconque des revendications 1 à 26, **caractérisé en ce que** le système de laser (14) peut être choisi librement par rapport au type de génération de rayons laser.

**28.** Robot à bras articulé selon l'une quelconque des revendications 1 à 27, **caractérisé en ce que** le guidage de rayon est effectué par l'intermédiaire de laser à guidage par fibre.

**29.** Robot à bras articulé selon l'une quelconque des revendications 1 à 27, **caractérisé en ce que** le guidage de rayon est effectué par l'intermédiaire de quatre miroirs (18I-IV) ainsi que par l'intermédiaire d'un élément (K) optique.

**30.** Robot à bras articulé selon l'une quelconque des revendications 1 à 29, **caractérisé en ce que** l'élément optique est un prisme de déviation de rayon (K).

Fig.1

Fig.3

Fig.2

Fig.5

Fig.4

Fig. 6

Fig. 7

EP 1 433 576 B1

10 '

Fig. 8

10 '

Fig. 9

Schnittebene B

Fig. 10

18 II

I3-5

18 III

4

a3

K

Spiegelführung

18 IV

5

3

Focussierlinse

Fig. 11

18 I

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2551378 A
- EP 0901875 A

- DE 4335367